(19) Europäisches Patentamt

European Patent Office

Office européen des brevets

(11) **EP 1 675 383 A2**

(12) **EUROPEAN PATENT APPLICATION**

(43) Date of publication:
**28.06.2006 Bulletin 2006/26**

(51) Int Cl.:
**H04N 5/217** (2006.01)

(21) Application number: **05112298.4**

(22) Date of filing: **16.12.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **21.12.2004 KR 2004109163**

(71) Applicant: **Samsung Electronics Co., Ltd.**
**Suwon-si**
**442-742 Gyeonggi-Do (KR)**

(72) Inventors:
• **Choi, Dong-bum**
  **Gyeonggi-do (KR)**
• **Kim, Moon-cheol**
  **Yeongtong-gu**
  **Suwon-si**
  **Gyeonggi-do (KR)**
• **Kim, Soo-young**
  **Suwon-si, Gyeonggi-do (KR)**

(74) Representative: **Walaski, Jan Filip et al**
**Venner Shipley LLP**
**20 Little Britain**
**London EC1A 7DH (GB)**

(54) **Image capturing apparatus and method for correcting nonlinear images**

(57) An image-capturing apparatus correcting nonlinear images includes an optical device for converting an input image to have nonlinear light intensity characteristics; an image sensor for converting the input image having the nonlinear characteristics into an electric signal; a correction unit for correcting the electric signal to obtain a signal having linear light intensity characteristics; a converter for converting the corrected signal into a digital signal; and a signal-processing unit for processing the converted digital signal to be displayed as an output image. Thus, if the optical device having the nonlinear characteristics extends a dynamic range of the image sensor, an output having nonlinear light intensity characteristics is corrected to have linear characteristics, so the resolution of the image can be improved.

EP 1 675 383 A2

**Description**

The present invention relates to an image-capturing apparatus and method for correcting nonlinear images, particularly but not exclusively to an image-capturing apparatus and method for correcting nonlinear images in order for the images to have linear characteristics as to light intensity, wherein the image-capturing apparatus uses an image sensor having a dynamic range extended by an optical device having nonlinear characteristics.

The dynamic range of an image sensor is an index indicating capability of processing light signals into images having light intensity levels. The dynamic range is defined as the saturation level of a pixel over the signal noise level of the pixel, and can be expressed as follows in Equation 1.

[Equation 1]

$$D = 20\log_{10}\left(\frac{Saturation\ level}{Noise}\right),$$

where D denotes a dynamic range of an image sensor, "Noise" denotes signal noise, and "Saturation level" denotes a saturation level of a pixel.

For example, if about 0.2 million electrons are detected upon saturation and about 40 electrons are detected upon noise, $20\log_{10}$ (5000) or -75 dB is obtained for the dynamic range.

If a scene to be captured has a high dynamic range, for instance containing a mixture of dark and bright portions, in order for all of the portions to be distinguished, the exposure time of the image sensor can be adjusted. However, there are limits to the extent to which exposure time adjustments can be used to ensure that dark and bright portions of an image are distinguishable. Accordingly, it may be desirable to extend the dynamic range of the image sensor.

There are various methods generally used to improve the dynamic range of an image sensor, for instance methods based on a determination of the saturation time of pixels, the use of different exposure times for different pixels and outputting an increased rate of signal charges.

The method based on the determination of saturation times involves outputting an exposure time rather than calculating pixel charges or voltages. For instance, the time when the potential of a photodiode of an image sensor reaches a predetermined threshold voltage, that is, a saturation state can be output through a counter by using a comparator instead of an analogue-to-digital (A/D) converter. That is, the method decides when the potential reaches a predetermined threshold value by using a comparator rather than an A/D converter, reads a discrete amount of stored charges, and directly converts the amount into digital type signals. The method is disclosed in U.S. Patent No. 6,069,377 and Japan Patent No. 2,953,297.

Further, the method of using different exposure times for different pixels has pixels exposed to strong light for short exposure times, and has pixels exposed to weak light for a long exposure time, so as to maintain signal levels at the same time as obtaining a wide dynamic range. This method is disclosed in U.S. Patent No. 6,498,576.

Further, in order to extend the dynamic range of an image sensor, from time to time, devices having nonlinear characteristics are placed in front of the image sensor in order for signals input to the image sensor to have nonlinear light intensity characteristics.

Since a signal input to an image sensor having linear characteristics has nonlinear light intensity characteristics, a signal output from the image sensor has nonlinear light intensity characteristics. However, if a signal output from an image sensor is converted into a digital signal, there occurs a problem in that, when sampling is done on output values of the image sensor at the same intervals, differences exist among the intervals of light intensity corresponding to the outputs at the same intervals since the signal of the image sensor has the nonlinear light intensity characteristics.

That is, the rate of increase of the output values of the image sensor is reduced as input light intensity is increased since the image sensor has a nonlinear characteristic, so there exist differences in a rate of change of the input light intensity corresponding to a rate of change of the same output values. Thus, there occurs a problem of deteriorating resolution since the same outputs relatively appear over light intensity having a change rate of input light intensity.

The present invention aims to address the above problems.

An aspect of the present invention is to provide image-capturing apparatus and method correcting nonlinear images in order for the images to have linear characteristics, thereby preventing resolution degradation due to the non-linearity of the images, if an optical device having nonlinear characteristics is used to extend a dynamic range of an image sensor.

According to an aspect of the present invention, there is provided an image-capturing apparatus correcting nonlinear images, comprising an optical device for converting an input image to have nonlinear light intensity characteristics; an image sensor for converting the input image having the nonlinear characteristics into an electrical signal; a correction unit for correcting the electrical signal to obtain a signal having linear light intensity characteristics; a converter for converting the corrected signal into a digital signal; and a signal-processing unit for processing the converted digital signal to be displayed as an output image.

The correction unit may correct the electrical signal by using an inverse function to a nonlinear characteristic function of the optical device in order to obtain a signal having linear light intensity characteristics.

The correction unit may be an analogue circuit having an inverse function to the nonlinear characteristic function of the optical device.

The optical device converts the electrical signal of the image sensor to have nonlinear light intensity characteristics in a range of over predetermined light intensities, and extends a dynamic range of the image sensor through the conversion.

If the optical device does not exist, the converter has the number of bits increased in proportion to the extended dynamic range of the image sensor by the optical device, with reference to the number of bits of the converter.

The image sensor may be a charge coupled device (CCD) or a complementary metal oxide semiconductor (CMOS).

According to an aspect of the present invention, there is provided an image-capturing apparatus correcting nonlinear images, comprising an optical device for converting an input image to have nonlinear light intensity characteristics; an image sensor for converting the input image having the nonlinear characteristics into an electrical signal; a converter for converting the electrical signal into a digital signal; a correction unit for correcting the converted digital signal to have linear characteristics over light intensity; a signal-processing unit for processing the corrected signal to be displayed as an output image.

The correction unit may correct the electrical signal to have linear characteristics over light intensity by using an inverse function to a nonlinear characteristic function of the optical device.

The correction unit may be a digital signal processor for processing the digital signal converted by the converter to have nonlinear characteristics.

The optical device may convert the electrical signal of the image sensor to have nonlinear light intensity characteristics in a range of over predetermined light intensities, and extends a dynamic range of the image sensor through the conversion.

The image sensor may be a charge coupled device (CCD) or a complementary metal oxide semiconductor (CMOS).

According to an aspect of the present invention, there is provided a nonlinear image-correcting method for an image-capturing apparatus including an optical device having nonlinear characteristics and an image sensor for photoelectrically converting an input image having the nonlinear characteristics, comprising converting the input image to have nonlinear light intensity characteristics so as to extend a dynamic range of the image sensor; converting the input image having nonlinear characteristics into an electrical signal; correcting the electrical signal to have linear characteristics over light intensity; converting the corrected signal into a digital signal; and processing the converted digital signal to be displayed as an output image.

The electrical signal may be corrected have linear characteristics over light intensity by using an inverse function to the nonlinear characteristic function of the optical device.

The electrical signal may be corrected by using an analogue circuit having an inverse function to the nonlinear characteristic function of the optical device.

According to an aspect of the present invention, there is provided a nonlinear image-correcting method for an image-capturing apparatus including an optical device having nonlinear characteristics and an image sensor for photoelectrically converting an input image having nonlinear characteristics, the method comprising converting the input image to have nonlinear light intensity characteristics so as to extend a dynamic range of the image sensor; converting the input image having the nonlinear characteristics into an electrical signal; converting the electrical signal to a digital signal; correcting the converted digital signal to have linear characteristics over light intensity; and processing the corrected digital signal to be displayed as an output image.

The converted digital signal is corrected to have linear characteristics over light intensity by using an inverse function to the nonlinear characteristic function of the optical device.

Embodiments of the invention will now be described, by way of example, with reference to the accompanying drawings, in which:

Figure 1A and Figure 1B are block diagrams schematically illustrating an image-capturing apparatus for correcting nonlinear images according to an exemplary embodiment of the present invention;
Figure 2 is a graph illustrating the dynamic range of an image sensor, the dynamic range being extended by the optical device of Figure 1A or Figure 1B;

Figure 3A is a graph illustrating a function used by the correction unit of Figure 1A or Figure 1B;

Figure 3B and Figure 3C are graphs illustrating the operation of the correction unit in the image-capturing apparatus of Figure 1A and Figure 1B, respectively; and

Figure 4 is a flow chart illustrating the steps performed in correcting nonlinear images according to an exemplary embodiment of the present invention.

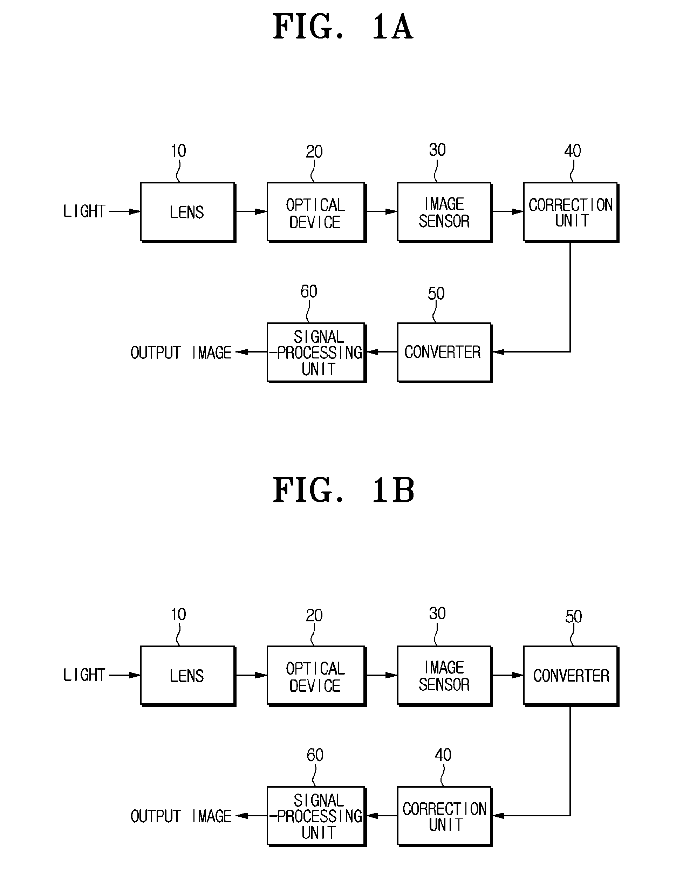

Figure 1A and Figure 1B are block diagrams schematically illustrating an image-capturing apparatus for correcting nonlinear images according to an exemplary embodiment of the present invention. Figure 1A is a block diagram of an apparatus for correcting nonlinear images prior to analogue to digital conversion of an electrical signal received from an image sensor 30 and Figure 1B is a block diagram of an apparatus for correcting nonlinear images after analogue to digital conversion of an electrical signal received from the image sensor 30 into a digital signal.

In Figure 1A and Figure 1B, the image-capturing apparatus includes a lens 10, an optical device 20, an image sensor 30, a correction unit 40, a converter 50, and a signal-processing unit 60.

First, the lens 10 receives light and transmits the light to the optical device 20.

The optical device 20 is a device having nonlinear characteristics, which enables the image sensor 30, which receives its input from the optical device 20, to output images having nonlinear characteristics with respect to light intensity. This can extend the range of input light intensities that can be received by the optical device 20 without the output values of the image sensor 30 becoming saturated.

The image sensor 30 itself has nonlinear light intensity characteristics, in that output images having more than a certain light intensity are recorded as having the same brightness. However, the optical device 20 causes the output values of the image sensor 30 to have nonlinear characteristics and also to have different output values for input light intensities more than a certain light intensity, thereby extending the dynamic range of the image sensor 30.

The image sensor 30 converts into an electrical signal the images it receives from the optical device 20. That is, the image sensor 30 detects as an analogue voltage signal charges generated in proportion to the intensity of light input to the image sensor 30.

The image sensor 30 can be a charge-coupled device (CCD)-type image sensor directly moving to an output unit the charge generated by input light by using gate pulses, a CMOS-type image sensor outputting the charge generated by input light through plural CMOS switches after conversion of the electrons into voltages of pixels, and so on.

The image sensor 30 is a device having linear characteristics up to the saturation point. However, the images received from the optical device 20 have nonlinear light intensity characteristics, and therefore the output signal of the image sensor 30 accordingly has nonlinear light intensity characteristics.

The correction unit 40 corrects an image having nonlinear light intensity characteristics into a signal having linear characteristics. The correction unit 40 operates before or after the image of the image sensor 30 having nonlinear light intensity characteristics is converted into a digital signal. That is, the correction unit 40 is placed before or after the converter 50 and corrects an analogue signal output from the image sensor 30, or corrects a digital signal output from the converter 50.

If the correction unit 40 is required to operate before the image having nonlinear characteristics is converted into a digital signal, the correction unit 40 is arranged to have an analogue circuit having an inverse relationship to the nonlinear characteristic function of the optical device 20, thereby linearising the signal received from the image sensor 30. However, if the correction unit 40 operates after the image having nonlinear characteristics is converted into a digital signal, the correction unit 40 processes a digital signal output from the converter 50 to form a linear signal.

The correction unit 40 uses the inverse relationship to the nonlinear characteristic function of the optical device 20 to correct an input signal to have linear light intensity characteristics.

That is, if the optical device 20 is used to extend a dynamic range of the image sensor 30, a signal having nonlinear characteristics is output due to the nonlinear characteristic function of the optical device 20. Thus, a signal input to the image sensor 30 has nonlinear characteristics due to the nonlinear characteristic function of the optical device 20, and, if the inverse function of the nonlinear characteristic function of the optical device 20 is applied to a signal output from the image sensor 30, the correction unit 40 can correct the signal having nonlinear characteristics into a signal having linear characteristics.

The converter 50 converts an input analogue signal into a digital signal. If the correction unit 40 operates before the image having nonlinear characteristics is converted into a digital signal, the converter 50 converts into a digital signal a signal which is a signal having linear characteristics that has been corrected by the correction unit 40. However, if the correction unit 40 operates after an image having nonlinear characteristics is converted into a digital signal, the converter 50 converts into a digital signal a signal output from the image sensor 30, and outputs the converted digital signal to the correction unit 40 for correction into a linear signal.

The signal-processing unit 60 performs signal processing so that the digital signal corrected to have linear characteristics is displayed as an output image.

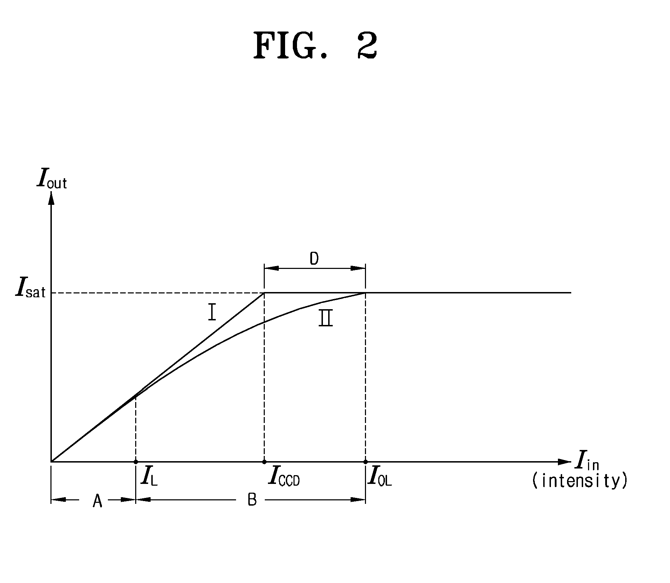

Figure 2 is a graph illustrating the dynamic range of the image sensor 30 extended by the optical device 20 of Figure 1A or Figure 1B. In Figure 2, the horizontal axis indicates input light intensity, and the vertical axis indicates output values of the image sensor 30. A first line I represents an output of the image sensor 30 when the the optical device 20 is not used with the image sensor 30, and a second line II represents an output of the image sensor 30 when the image sensor 30 is used in combination with the optical device 20.

Reference numerals $I_{CCD}$ and $I_{OL}$ of the graphs I and II denote light intensities having a saturated output value for each respective line, and a reference numeral $I_{sat}$ denotes a saturated output value of the image sensor 30. Further, section A is an interval in which the output values of the graph II have linear light intensity characteristics, and section B is an interval in which the output values of the graph II have nonlinear light intensity characteristics. Section D denotes an interval in which the dynamic range of the image sensor 30 is extended when the optical device 20 is used so that the output values of the image sensor 30 have nonlinear light intensity characteristics.

In Figure 2, when the optical device 20 is used, graph II illustrates that the output values of the image sensor 30 have nonlinear light intensity characteristics, above a certain input light intensity $I_L$. In section A, that is, below $I_L$, the output values of the image sensor 30 have linear light intensity characteristicsas in the case that the optical device 20 is not used.

In section B, that is input intensities over $I_L$, the output values of the image sensor 30 have nonlinear light intensity characteristics unlike the case where the optical device 20 is not used. In the nonlinear-characteristics sections, the rate of increase of the output values with respect to input light intensity is reduced as light intensity is increased, as compared to the linear-characteristics sections.

Since the rate of increase of the output values is reduced in section B as light intensity is increased, the output values of the image sensor 30 are different in section D as light intensity is increased, unlike the case where the optical device 20 is not used, where saturation occurs. Thus, the particular brightness of images having light intensities in the range of section D can be determined. That is, a dynamic range of the image sensor 30 over which the image sensor 30 can process light signals without saturation is extended.

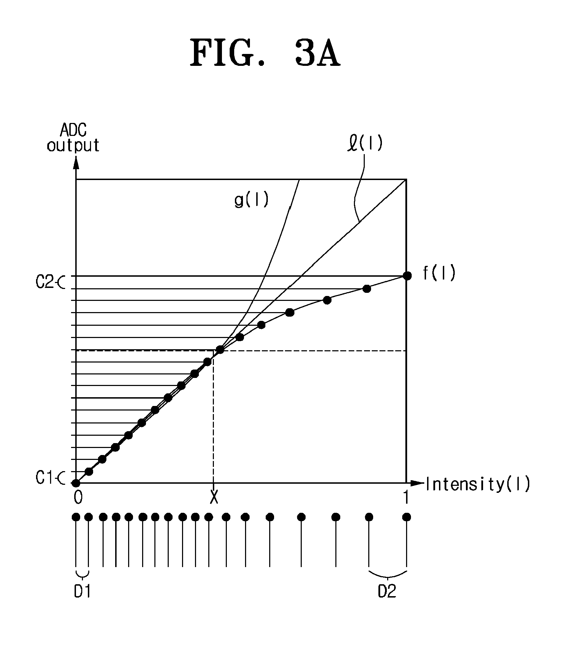

Figure 3A is a view illustrating a function used by the correction unit 40 of Figure 1A or Figure 1B. Reference numerals D1 and D2 denote ranges of input light intensities that can be distinguished depending on resolution, respectively, and C1 and C2 denote ranges of output values of the image sensor 30 to which sampling has been applied, at the same interval. Further, a reference numeral X denotes the cut-off point of the output values having linear characteristics over light intensity, and therefore the output values of the image sensor 30 have linear characteristics in a range of light intensity from 0 to X.

Further, f(I) refers to a nonlinear characteristic function of the optical device 20, g(I) refers to an inverse function to a nonlinear characteristic function of the optical device 20, and 1(I) refers to an output value of the converter 50 having linear light intensity characteristics after the inverse function g(I) to the nonlinear characteristic function f(I) is applied to the nonlinear characteristic function f(I).

In Figure 3A, if the optical device 20 is used such that the output values of the image sensor 30 have nonlinear light intensity characteristics, the change in input light intensity that can be distinguished depending on resolution may differ according to the magnitude of the input light intensity, but the corresponding change in the output values of the image sensor 30 remains constant.

For instance, even though the input light intensity bands D1, D2 illustrated in Figure 3A increase in size as the light intensity increases, the corresponding output bands of the image sensor 30 remain the same due to the nonlinear characteristics of the output values of the image sensor 30. When the wrong output values of the image sensor 30 are used for signal processing, the resolution of output images can deteriorate.

For example, first, it is assumed that a change C1 in the output value of the image sensor 30 is '1' when a difference D1 of input light intensities is $1/2^n$ in a range of low light intensity. In Figure 3A, even though the change D2 in the input value of the image sensor 30 becomes '5' when the difference D2 of input light intensities is $5/2^n$ in a range of high light intensity, the change amount of the output values C2 remains '1' which is the same as for the difference D1, which can have drawbacks with regards to image quality.

That is, sampling is applied in the same intervals for the change in the output value of the image sensor 30 in the ranges of low and high light intensities, but the actual changes in input light intensity are different. This occurs since the output values of the image sensor 30 have nonlinear light intensity characteristics and the rate of increase of the output values decreases over a certain light intensity.

In order for the output values of the image sensor 30 to be corrected to have linear light intensity characteristics, an inverse function to a characteristic function of the optical device 20 can be applied to the output values of the image sensor 30 having nonlinear characteristics, which can be explained in Equations 2 and 3 as follows.

[Equation 2]

$$I = g(f(I)) = f^{-1}(f(I))$$

[Equation 3]

$$g(I) = f^{-1}(I)$$

where, I denotes light intensity, and f(I) denotes a nonlinear characteristic function of the optical device 20. Further, g (I) denotes a function used to correct the output values of the image sensor 30, that is, an inverse function to the nonlinear characteristic function of the optical device 20.

In order for the output values of the image sensor 30 to be corrected to have linear characteristics, the values obtained from applying an arbitrary function to the output values of the image sensor 30 to which a nonlinear characteristic function is applied have linear characteristics. That is, in Equation 2, the input light intensity I becomes values obtained from applying an arbitrary function to the output values of the image sensor 30 to which a nonlinear characteristic function is applied.

Thus, in order for the output values of the image sensor 30 to have the linear characteristics, as expressed in Equation 3, a function applied to the output values of the image sensor 30 to which a nonlinear characteristic function is applied becomes an inverse function to the nonlinear characteristic function of the optical device 20.

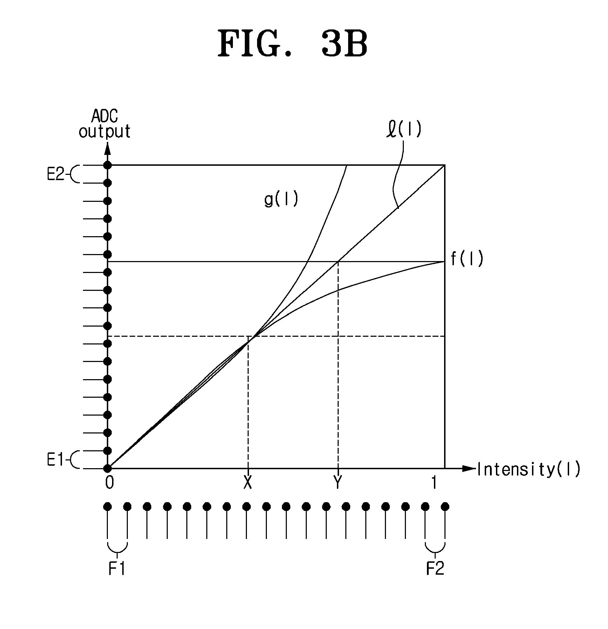

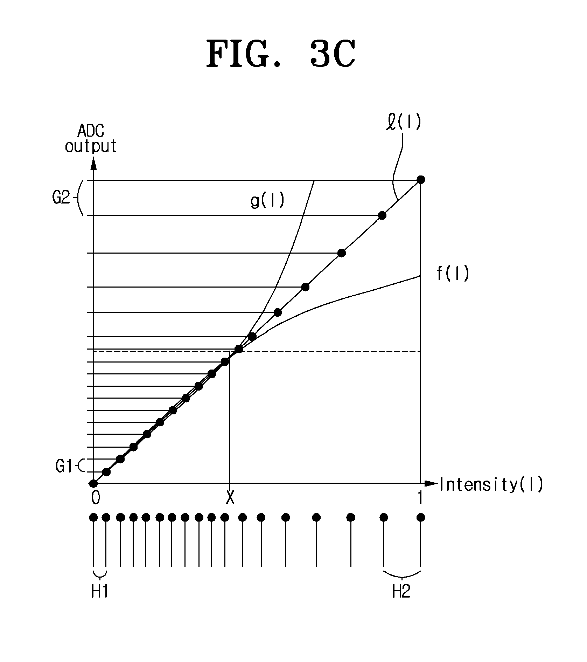

Figure 3B and Figure 3C are views for explaining operations of the correction unit 40 of the image-capturing apparatus of Figure 1A and Figure 1B, respectively. That is, Figure 3B shows the operation of the correction unit 40 before images having nonlinear characteristics are converted into a digital signal, and Figure 3C shows the operation of the correction unit 40 after images having nonlinear characteristics are converted into a digital signal.

As in Figure 3A, F1, F2, H1, and H2 denote a range of input light intensity that can be distinguished depending on resolution, respectively, and E1, E2, G1, and G2 denote a range of output values of the image sensor 30 sampled at the same interval, respectively. Further, X denotes a maximum value of the output values having linear characteristics over light intensity, and, if light intensity is in the range from 0 to X, the output values of the image sensor 30 have linear characteristics. Y denotes light intensity when the output values of the image sensor 30 have saturated output values.

In Figures 3B and 3C, f(I) denotes a nonlinear characteristic function of the optical device 20, and g(I) is an inverse function to the nonlinear characteristic function of the optical device 20. 1(I) denotes output values of the converter 50 having linear light intensity characteristics after the inverse function g(I) to a nonlinear characteristic function is applied to the nonlinear characteristic function f(I).

In Figure 3B, if the correction unit 40 operates before images having nonlinear characteristics are converted into a digital signal, the output values of the correction unit 40 are obtained after the values have been corrected to have linear characteristics. Thus, input light intensity corresponding to change amounts of respective output values of the image sensor 30 that are sampled at the same interval has the same change amount. That is, a sampling rate in a range of low light intensity is identical to a sampling rate in a range of high light intensity. The correction unit 40 is, for example, built with an analogue circuit having an inverse relationship to the nonlinear characteristic function of the optical device 20.

However, if the correction unit 40 operates after images having nonlinear characteristics are converted into a digital signal, the output values of the image sensor 30 having an extended dynamic range are corrected to have linear characteristics and input to the converter 50, so the number of bits for the converter 50 has to be increased in proportion to the extension of the dynamic range of the image sensor 30. For example, when sampling is applied to the output values of the image sensor 30 not extended in the dynamic range through an eight-bit converter 50 and the dynamic range of the image sensor 30 is increased by a factor of two by the optical device 20, the output values of the image sensor 30 become linear, so a 9-bit signal is generated, which requires a nine-bit converter 50.

In Figure 3C, if the correction unit 40 operates after images having nonlinear characteristics are converted into a digital signal, the output values of the converter 50 are corrected to have linear characteristics by the correction unit 40.

In order for the output values of the converter 50 to be corrected to have linear light intensity characteristics the interval of the output values of the converter 50 becomes gradually increased as the interval of input light intensity gradually increases instead of using the same intervals as shown in Figure 3B. That is, a sampling rate in a low light intensity range is different from that in a high light intensity range. Thus, the resolution in the low light intensity range is relatively high compared to the resolution in the high light intensity range.

Therefore, if the correction unit 40 operates after images having nonlinear characteristics are converted into a digital signal, it becomes more sensitive to the change of the resolution as light intensity becomes lower since the resolution in the range of low light intensity is higher than the resolution in the high light intensity range, and it becomes less sensitive to the change of the resolution as light intensity becomes higher, which shows characteristics similar to visual perception in humans.

If the correction unit 40 operates after images having nonlinear characteristics are converted into a digital signal, the correction unit 40 becomes a digital signal processor to correct a digital signal input from the converter 50.

In an alternative embodiment, referring to Figure 3, the converter 50 samples the curve f(I) at the increasing intervals shown in Figure 3C, which would result in a linear output from the converter, with approximately equal intervals G1, G2, so combining the functions of converter 50 and correction unit 40.

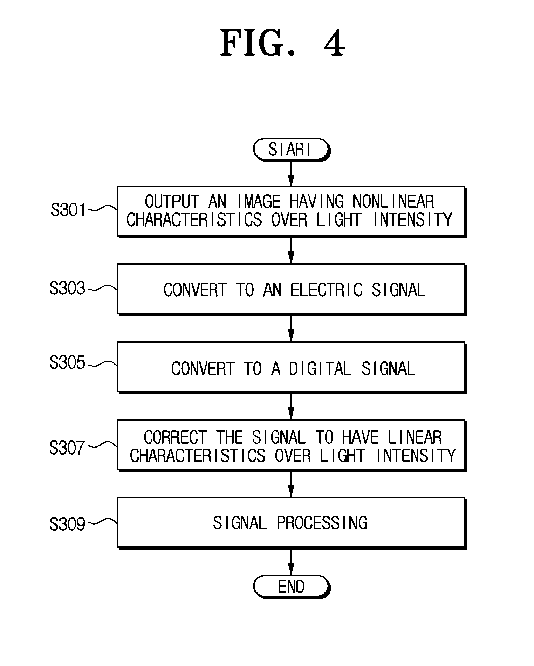

Figure 4 is a flow chart illustrating method steps for correcting nonlinear characteristics according to an exemplary embodiment of the present invention.

In Figure 4, first, the optical device 20 converts light focused by the lens 10 into an image having nonlinear light intensity characteristics (S301). The optical device 20 is a device having nonlinear characteristics, and converts light input from the lens 10 by a nonlinear characteristic function into an image having nonlinear characteristics.

Further, as described in Figure 2, the optical device 20 is positioned prior to the image sensor 30 in order for the image to have nonlinear light intensity characteristics above a certain light intensity level, so the dynamic range of the image sensor 30 is extended. However, due to the extended dynamic range of the image sensor 30, an increase rate of the output values is reduced as light intensity over a certain level increases.

Further, the image sensor 30 converts the output image into an electrical signal to have nonlinear light intensity characteristics (S303). That is, the image sensor 30 detects as an analogue voltage the signal charges generated in proportion to input light intensity.

Next, the converter 50 converts an electrical signal, that is, an analogue signal into a digital signal (S305). That is, the converter 50 is an analogue-to-digital (A/D) converter.

The converter 50 applies sampling to the output values of the image sensor 30 at the same interval, and outputs the same output values of the converter 50 over the change amount of light intensity corresponding to the change amount of the sampled output values of the image sensor 30. However, since the output values of the image sensor 30 have nonlinear light intensity characteristics over a certain intensity level, the change amount of light intensity increases that corresponds to the change amount of the sampled and identical output values of the image sensor 30.

Since the output values of the image sensor 30 become identical over the large change amount of light intensity as light intensity increases, the resolution decreases as light intensity increases. Thus, in order for an image of high resolution to be displayed, the output values of the converter 50 need to be corrected to have linear characteristics over light intensity.

Next, the output values of the converter 50 are corrected to have linear characteristics over light intensity (S307). An inverse function to the nonlinear characteristic function of the optical device 20 is applied to the output values of the converter 50, so input values to the signal-processing unit 60 are corrected to have linear light intensity characteristics. Since the output values of the converter 50 have the nonlinear characteristics due to the nonlinear characteristic function of the optical device 20, an inverse function to the nonlinear characteristic function of the optical device 20 is applied to the output values of the converter 50 so that the output values of the converter 50 have nonlinear light intensity characteristics. The description has been made in detail on the relationship between the corrected output values of the converter 50 and light intensities with reference to Figure 3C.

Next, the corrected output values of the converter 50 are signal-processed to be displayed on a screen (S309).

Further, in the step S303, the output values of the image sensor 30 can be corrected to have linear characteristics for the first time, after the image sensor 30 converts an input image into an electrical signal, before converting the electrical signal into a digital signal. Next, the electrical signal corrected to have linear characteristics is converted to the digital signal, and then the digital signal is processed in order for the image to be displayed. In here, description has been made in detail on the relationship between light intensity and the output values of the converter 50 converting a signal corrected to have linear characteristics into a digital signal with reference to Figure 3B.

As aforementioned, as an optical device having nonlinear characteristics extends a dynamic range of an image sensor, the present invention corrects the outputs having nonlinear light intensity characteristics to have linear characteristics, thereby improving the resolution of images.

The foregoing exemplary embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

**Claims**

1. An image-capturing apparatus comprising:

   an image sensor which converts an input image having nonlinear characteristics into an electrical signal;
   a correction unit which corrects the electrical signal to generate a corrected signal having linear characteristics over light intensity;
   a converter which converts the corrected signal into a digital signal; and
   a signal-processing unit which processes the digital signal to be displayed as an output image.

2. The image-capturing apparatus as claimed in claim 1, further comprising an optical device which converts input light to the input image having the nonlinear characteristics over the light intensity.

3. The image-capturing apparatus as claimed in claim 2, wherein the correction unit corrects the electrical signal using a function inverse to a nonlinear characteristic function of the optical device in order to generate the corrected signal having the linear light intensity characteristics linear light intensity characteristics.

4. The image-capturing apparatus as claimed in claim 2, wherein the correction unit comprises an analogue circuit having a function inverse to a nonlinear characteristic function of the optical device.

5. The image-capturing apparatus as claimed in claim 2, wherein the optical device converts the input light to the image having the nonlinear characteristics over the light intensity in a range of predetermined light intensities, and extends a dynamic range of the image sensor through the conversion.

6. The image-capturing apparatus as claimed in claim 2, wherein the image sensor comprises a charge coupled device or a complementary metal oxide semiconductor.

7. The image-capturing apparatus as claimed in claim 1, wherein the converter has a number of bits which is increased in proportion to an extended dynamic range of the image sensor by the optical device.

8. An image-capturing apparatus comprising:

   an optical device which converts input light to an image having nonlinear light intensity characteristics;
   an image sensor which converts the image having the nonlinear characteristics into an electrical signal;
   a converter which coverts the electrical signal into a digital signal;
   a correction unit which corrects the digital signal to generate a corrected signal having linear light intensity characteristics linear light intensity characteristics;
   a signal-processing unit which processes the corrected signal to be displayed as an output image.

9. The image-capturing apparatus as claimed in claim 8, wherein the correction unit corrects the electrical signal to generate the corrected signal having the linear light intensity characteristics linear light intensity characteristics using a function inverse to a nonlinear characteristic function of the optical device.

10. The image-capturing apparatus as claimed in claim 8, wherein the correction unit comprises a digital signal processor which processes the digital signal having the nonlinear characteristics.

11. The image-capturing apparatus as claimed in claim 8, wherein the optical device converts the input light to the image having the nonlinear light intensity characteristics in a range of predetermined light intensities, and extends a dynamic range of the image sensor through the conversion.

12. The image-capturing apparatus as claimed in claim 8, wherein the image sensor comprises a charge coupled device or a complementary metal oxide semiconductor.

13. A nonlinear image-correcting method for an image-capturing apparatus including an optical device having nonlinear characteristics and an image sensor which photoelectrically converts an input image having the nonlinear characteristics, the method comprising:

   converting input light to the input image having the nonlinear light intensity characteristics so as to extend a dynamic range of the image sensor;
converting the input image having nonlinear characteristics into an electrical signal;
correcting the electrical signal to generate a corrected signal having linear light intensity characteristics;
converting the corrected signal into a digital signal; and
processing the digital signal to be displayed as an output image.

14. The nonlinear image-correcting method as claimed in claim 12, wherein the correcting corrects the electrical signal to generate the corrected signal having the linear light intensity characteristics by using a function inverse to a nonlinear characteristic function of the optical device.

15. The nonlinear image-correcting method as claimed in claim 11, wherein the correcting corrects the electrical signal using an analogue circuit having a function inverse to a nonlinear characteristic function of the optical device.

16. A nonlinear image-correcting method for an image-capturing apparatus including an optical device having nonlinear characteristics and an image sensor which photoelectrically converts an input image having nonlinear characteristics, the method comprising:

converting input light to the input image having the nonlinear light intensity characteristics so as to extend a dynamic range of the image sensor;
converting the input image having the nonlinear characteristics into an electrical signal;
converting the electrical signal to a digital signal;
correcting the digital signal to generate a corrected signal having linear light intensity characteristics; and
processing the corrected signal to be displayed as an output image.

17. The nonlinear image-correcting method as claimed in claim 16, wherein the correction corrects the digital signal to generate the corrected signal having the linear light intensity characteristics by using a function inverse to the nonlinear characteristic function of the optical device.

18. An image-capturing apparatus comprising:

an image sensor for providing an image signal having nonlinear light intensity characteristics corresponding to an input image; and
means for linearising the image signal.

# FIG. 1A

LIGHT → | LENS [10] | → | OPTICAL DEVICE [20] | → | IMAGE SENSOR [30] | → | CORRECTION UNIT [40] |

OUTPUT IMAGE ← | SIGNAL -PROCESSING UNIT [60] | ← | CONVERTER [50] | ←

# FIG. 1B

LIGHT → | LENS [10] | → | OPTICAL DEVICE [20] | → | IMAGE SENSOR [30] | → | CONVERTER [50] |

OUTPUT IMAGE ← | SIGNAL -PROCESSING UNIT [60] | ← | CORRECTION UNIT [40] | ←

# FIG. 2

# FIG. 3A

# FIG. 3B

# FIG. 3C

# FIG. 4

START

S301 — OUTPUT AN IMAGE HAVING NONLINEAR CHARACTERISTICS OVER LIGHT INTENSITY

S303 — CONVERT TO AN ELECTRIC SIGNAL

S305 — CONVERT TO A DIGITAL SIGNAL

S307 — CORRECT THE SIGNAL TO HAVE LINEAR CHARACTERISTICS OVER LIGHT INTENSITY

S309 — SIGNAL PROCESSING

END